# EUROPÄISCHE PATENTANMELDUNG

(11) **EP 1 246 100 A2**
(43) Veröffentlichungstag der Anmeldung: **02.10.2002**
(21) Anmeldenummer: 02006123.0
(22) Anmeldetag: 18.03.2002
(51) Int. Cl.: G06F 17/60, H04L 12/58

(54) **Verfahren, Vorrichtung und E-Mailserver zum Erkennen einer unerwünschten E-Mail**

(30) Priorität: 29.03.2001 DE 10115428
(71) Anmelder: SIEMENS AKTIENGESELLSCHAFT, 80333 München (DE)
(72) Erfinder: Kuth, Rainer, 91074 Herzogenaurach (DE)

(57) **Zusammenfassung**

Die Erfindung betrifft ein Verfahren, eine Vorrichtung und einen E-Mailserver (21) zum Erkennen einer unerwünschten E-Mail (300) bevor ein Adressat (27-31) der unerwünschten E-Mail (300) die unerwünschte E-Mail (300) liest. Für das Verfahren wird eine für den Adressaten (27-31) bestimmte erste E-Mail (300) mit wenigstens einem vorbestimmten Kriterium bewertet, bevor der Adressat (27-31) die erste E-Mail (300) liest. Basierend auf der Bewertung wird automatisch eine zweite E-Mail (400, 500) mit einem Hinweise, für den Adressaten (27-31) liege eine eventuell unerwünschte E-Mail vor, automatisch erstellt und an den Adressaten (27-31) der ersten E-Mail (300) geschickt.

## Beschreibung

Die Erfindung betrifft ein Verfahren, eine Vorrichtung und einen E-Mailserver zum Erkennen einer unerwünschten E-Mail bevor ein Adressat der unerwünschten E-Mail diese liest.

Es kommt leider immer wieder vor, dass Personen eine unerwünschte E-Mail, wie beispielsweise eine Werbe- oder eine einen Computervirus umfassende E-Mail erhalten. Die Werbe-E-Mail ist zwar nur lästig oder vergeudet kostbare Arbeitszeit, wenn sie während der Arbeitszeit gelesen wird. Die einen Computervirus umfassende E-Mail kann aber, wenn sie erst einmal mit einem Rechner von einem die E-Mail speichernden E-Mailserver herunter geladen und zum Lesen geöffnet wurde, Schäden an Hard- und Software des Rechners bewirken.

Es gibt zwar schon sogenannte Virenscanner, also Computerprogramme, die E-Mails auf Computerviren untersuchen und die erkannten Computerviren unschädlich machen. Bekannte Virenscanner können aber nur bekannte Computerviren identifizieren. Lästige Werbe-E-Mails werden mit den Virenscannern auch nicht entdeckt.

In der US 6,023,723 ist ein Verfahren zum automatischen Erkennen und Löschen von unerwünschten E-Mails offenbart. Jede ankommende E-Mail wird überprüft, ob sie von einem unerwünschten oder von einem erwünschten Absender stammt. Diese Informationen sind in entsprechenden Listen enthalten. Stammt eine E-Mail von einem unerwünschten Absender, wird sie automatisch gelöscht, bevor der Adressat sie lesen kann. Stammt die E-Mail von einem erwünschten Absender, wird sie in den Eingangskorb des Adressaten geleitet. Stammt die E-Mail weder von einem erwünschten noch von einem unerwünschten Absender, wird sie in einen separaten, extra gekennzeichneten Ordner geleitet, den der Adressat einsehen kann.

Aus der US 5,999,932 ist ein Verfahren bekannt, dass automatisch E-Mails in erwünschte, potenziell interessante und unerwünschte E-Mails kategorisiert und entsprechend kennzeichnet. Eine E-Mail wird als erwünscht erkannt, wenn Daten von ausgefüllten Feldern der E-Mail, wie z.B. das Adress- oder das Betreff-Feld der E-Mail, mit in einer Liste gespeicherten Daten übereinstimmen. Die E-Mail wird dann beispielsweise mit "OK" gekennzeichnet. Stimmen die Daten der Felder nicht mit den in der Liste gespeicherten Daten überein, wird die E-Mail mit vorbestimmten Kriterien bewertet und entsprechend der Bewertung als potenziell interessant oder als unerwünscht bewertet. Eine potenziell interessante E-Mail wird beispielsweise mit "NEW" und eine unerwünschte E-Mail mit "JUNK" gekennzeichnet.

Der US 6,052,709 ist ein System zum Überwachen von Junk-Mails zu entnehmen. Das System umfasst ein Kommunikationsnetzwerk mit mehreren Terminals, denen jeweils eine E-Mail Adresse zugeordnet ist, und ein Kontrollzentrum. Das Kontrollzentrum ist derart ausgeführt, dass es zusätzliche E-Mail Adressen erzeugt und auf dem Kommunikationsnetzwerk verteilt. Die zusätzlichen E-Mail Adressen sind keiner speziellen Person zugeordnet. Empfängt einer der zusätzlichen E-Mail Adressen eine E-Mail, werden ihre Absenderdaten extrahiert und in einer Datenbank des Kontrollzentrums gespeichert. Anschließend werden auf den Terminals gespeicherte Filter derart modifiziert, dass jeder Terminal erkennt, wenn er eine E-Mail von dem Absender empfängt, der vorher eine E-Mail an eine der zusätzlichen E-Mail Adressen verschickt hat.

In der US 6,112,227 ist ein weiteres Verfahren beschrieben, mit dessen Hilfe das Empfangen von unerwünschten E-Mails verhindert werden soll. Empfängt ein E-Mailserver eine E-Mail, ermittelt er, ob der Absender der E-Mail registriert ist, bevor er die E-Mail an den Client, an den die E-Mail adressiert ist, weiterleitet. Ist der Absender nicht registriert, schickt der E-Mailserver ein Registrierungsformular an den Absender der E-Mail, um diesen zu registrieren. Nach der Registrierung leitet er die E-Mail an den Client, an den die E-Mail adressiert ist, weiter.

Ein weiteres Verfahren zum Klassifizieren von E-Mails in erwünschte und unerwünschte E-Mails ist in der US 6,161,130 offenbart. Der Inhalt einer empfangenen E-Mail wird nach vorbestimmten Wörtern oder Phrasen automatisch überprüft. Anschließend wird aufgrund von gefundenen Wörtern bzw. Phrasen und aufgrund von Wahrscheinlichkeiten automatisch bestimmt, ob die E-Mail unerwünscht oder erwünscht ist; die E-Mail wird danach in entsprechende Ordner weiter geleitet. Sollte der Adressat eine E-Mail anders klassifizieren, wie durch das automatische Klassifizieren geschehen, werden die Wahrscheinlichkeiten zur automatischen Klassifizierung neu bestimmt.

Mittels des in der US 6,167,434 offenbarten Computerprogramms wird es einem Adressaten einer Spam-Mail erleichtert, sich von einer Versender-Liste des Absenders der Spam-Mail streichen zu lassen. Das Computerprogramm ist derart ausgeführt, dass es, nachdem der Adressat der Spam-Mail diese gelöscht hat, automatisch eine E-Mail an den Absender der Spam-Mail geschickt wird. Die E-Mail umfasst eine Aufforderung, den Adressaten von der Versender-Liste zu streichen.

Aus der US 6,199,103 B1 ist ein Verfahren zum Bestimmen von Kriterien zum Ermitteln einer Junk-Mail bekannt. Eine empfangene E-Mail wird mittels bekannter Kriterien als Junk-Mail erkannt. Die Junk-Mail wird daraufhin gespeichert und ihr Inhalt daraufhin analysiert, ob er weitere geeignete Kriterien zum Erkennen einer Junk-Mail enthält. Enthält die Junk-Mail weitere geeignete Kriterien, werden sie zu den bereits bekannten Kriterien zugefügt.

Aus der GB 2 350 747 A ist ein Verfahren zum Unterbinden unerwünschter, an ein Netzwerk adressierter E-Mails offenbart. Ein Teilnehmer des Netzwerkes empfängt eine E-Mail und kategorisiert sie als unerwünscht. Daraufhin wird überprüft, ob der Teilnehmer oder weitere Teilnehmer des Netzwerkes zumindest ähnliche E-Mails empfangen. Basierend auf der Überprüfung werden geeignete Gegenmaßnahmen eingeleitet.

Aufgrund des in der WO 00/49776 vorgeschlagenen Verfahrens werden von einem Server übermittelte E-Mails an einen Proxy Host geleitet, der vor der Weiterleitung der E-Mails an den entsprechenden Client Junk-Mails herausfiltert. Der Proxy Host kann derart ausgeführt sein, dass er hersausgefilterte Junk-Mails über ein sicheres World Wide Web Dokument an einen Administrator weiterleitet, so dass dieser sie überprüfen kann.

In der WO 01/16695 A1 wird vorgeschlagen, nur solche E-Mails von dem Server an den Adressaten weiter zuleiten, die von vorbestimmten Absendern stammen. Empfängt der Server eine E-Mail, die nicht von einem der vorbestimmten Absendern stammt, wird der Absender aufgefordert, seine Berechtigung nachzuweisen. Weist der Absender seine Berechtigung innerhalb einer vorgegebenen Zeitdauer nach, wird die E-Mail dem Adressaten zugestellt, andernfalls wird sie automatisch gelöscht.

Der JP 2000163341 A ist ein Verfahren zu entnehmen, bei dem ein E-Mailserver den Absender und Adressaten einer empfangenen E-Mail extrahiert, und automatisch ermittelt, ob die E-Mail gelöscht werden soll. Wird die E-Mail automatisch gelöscht, dann bekommt der Absender der E-Mail automatisch eine Hinweis E-Mail geschickt, mit der er über die Löschung der empfangenen E-Mail und die Gründe für die automatische Löschung informiert wird.

In der JP 2000339236 A ist ein Verfahren beschrieben, aufgrund dessen der Absender einer empfangenen E-Mail extrahiert und mit Absendern einer Liste verglichen wird. Sollte der Absender in der Liste enthalten sein, wird die E-Mail automatisch gelöscht, eine Hinweis E-Mail an den Absender verschickt oder die E-Mail für den Adressaten gekennzeichnet.

Die Aufgabe der Erfindung ist daher ein Verfahren anzugeben, welches Voraussetzungen schafft, unerwünschte E-Mails zu beseitigen, bevor sie Schäden anrichten können. Weitere Aufgaben der Erfindung sind eine Vorrichtung und einen E-Mailserver derart auszugestalten, dass Voraussetzungen geschaffen werden, unerwünschte E-Mails zu beseitigen, bevor sie Schäden anrichten können.

Die erste Aufgabe wird erfindungsgemäß gelöst mit einem Verfahren zum Erkennen einer unerwünschten E-Mail, aufweisend folgende Verfahrensschritte:
- Empfangen einer an einen Adressaten gesendeten ersten E-Mail mit einem E-Mailserver,
- automatisches Bewerten der ersten E-Mail mit wenigstens einem vorbestimmten Kriterium und
- basierend auf der Bewertung der ersten E-Mail, automatisches Herstellen und Versenden einer zweiten E-Mail an einen Rechner des Adressaten der ersten E-Mail mit einem Hinweis, für den Adressaten liege eine eventuell unerwünschte E-Mail vor, bevor die erste E-Mail an den Rechner des Adressat weiter geleitet wird.

Unter einer unerwünschter E-Mail wird insbesondere eine einen Computervirus umfassende E-Mail oder eine sogenannte Junk-Mail wie z.B. eine unaufgefordert erhaltene Werbe-E-Mail verstanden. Die den Computervirus umfassende E-Mail kann im schlimmsten Fall zur Beschädigung eines Rechners des Adressaten oder von auf diesem Rechner gespeicherter Rechnerprogramme führen. Das Lesen von Junk-Mails kann dagegen unnötig Arbeitszeit vergeuden.

Erfindungsgemäß wird also die erste E-Mail nach wenigstens einem Kriterium bewertet, bevor der Adressat diese E-Mail lesen kann; d.h. die erste E-Mail wird bewertet, bevor sie der Adressat mit seinem Rechner von einem E-Mailserver herunterladen und öffnen kann, bzw. bevor der E-Mailserver die erste E-Mail an den Rechner des Adressaten weiterleitet. Die erste E-Mail wird somit bewertet, bevor sie einen Schaden anrichten kann. Die Bewertung der ersten E-Mail kann z.B. mittels eines auf dem E-Mailserver gespeicherten Rechnerprogramms erfolgen.

Ein Kriterium zum Bewerten der ersten E-Mail ist beispielsweise gemäß einer Ausführungsform der Erfindung eine Anzahl von weiteren Adressaten, an die ebenfalls die erste E-Mail adressiert ist. Gerade eine Junk-Mail oder eine einen Computervirus umfassende E-Mail werden an viele Adressaten geschickt, um z.B. einen möglichst großen Schaden anzurichten. Eine große Anzahl von Adressaten derselben E-Mail kann also ein Anzeichen für eine unerwünschte E-Mail sein.

Ein weiteres Anzeichen für eine unerwünschte E-Mail ist, dass der Adressat oder die Adressaten wiederholt in einer relativ kurzen Zeit dieselbe E-Mail mehrmals geschickt bekommt, damit ein Absender der E-Mail seine Chance erhöht, dass der Adressat oder wenigstens einer der Adressaten die E-Mail öffnet und liest. Eine besondere bevorzugte Variante der Erfindung sieht deshalb vor, dass das Kriterium eine Anzahl von weiteren E-Mails ist, die in einer vorgegebenen Zeitdauer an den Adressaten oder weiteren Adressaten gesendet wurden und denselben Betreff aufweisen wie die erste E-Mail.

Gemäß einer Variante der Erfindung ist das Kriterium eine Anzahl von weiteren E-Mails, die dieselbe Checksumme des Datensatzes des Betreffs und/oder der Mitteilung aufweisen wie die erste E-Mail. Die Checksumme ist dadurch charakterisiert, dass eine Änderung eines einzelnen Bits im ganzen Datensatz, über den die Checksumme gebildet wird, die Checksumme ändert. Dies wird erreicht indem alle Bytes eines Datensatzes aufsummiert werden. Wenn die Datensätze im 8 Bit Verfahren, wie z.B. im ASCII bzw. im erweiterten ASCII Format übertragen werden, entspricht die Checksumme einer Zahl zwischen 1 und 256. Sie ändert sich, sobald ein Bit innerhalb des Datensatzes verschieden ist. D.h., zwei E-Mails mit derselben Mitteilung, also zwei gleiche E-Mails, haben dieselbe Checksumme der Datensätze ihrer Mitteilungen.

Nach der Bewertung der E-Mail wird erfindungsgemäß und basierend auf der Bewertung der ersten E-Mail automatisch eine zweite E-Mail an den Adressaten mit einem Hinweis geschickt, eine eventuell unerwünschte E-Mail sei am E-Mailserver eingetroffen. Diese zweite E-Mail wird beispielsweise automatisch von dem E-Mailserver hergestellt und automatisch an den Adressaten verschickt. Der Hinweis kann vorteilhafter Weise den Betreff, den Absender und die Anzahl weitere Adressaten der ersten E-Mail umfassen. Aufgrund dieser zweiten E-Mail ist der Adressat gewarnt und kann selber entscheiden, ob er die erste E-Mail von dem E-Mailserver herunter laden, öffnen und lesen möchte.

Nach einer weiteren Variante der Erfindung ist vorgesehen, dass die erste E-Mail nur dann bewertet wird, wenn sie von einem Rechner versendet wurde, der außerhalb eines lokalen Rechnernetzwerkes angeschlossen ist, wobei das lokale Rechnernetzwerk einen Rechner des Adressaten umfasst und von dem Rechner kontaktiert werden kann, von dem die erste E-Mail versendet wurde. Das lokale Rechnernetzwerk kann z.B. einem Unternehmen oder einer staatlichen Behörde zugeordnet sein. Innerhalb des lokalen Rechnernetzwerkes versendete E-Mails werden folglich nicht bewertet, da es unwahrscheinlich ist, dass sie Junk-Mails sind oder mit einem Computervirus versehen sind. Somit werden insbesondere E-Mails, welche an einen größeren Adressatenkreis innerhalb des Unternehmens oder der staatlichen Behörde gerichtet sind, unbewertet versendet.

Die weitere Aufgabe der Erfindung wird gelöst durch eine Vorrichtung zum Erkennen einer unerwünschten E-Mail bevor ein Adressat der unerwünschten E-Mail die unerwünschte E-Mail liest, aufweisend
- einen E-Mailserver und
- einen mit dem E-Mailserver verbundenen Rechner zum Lesen von an den Adressaten bestimmten E-Mails,
wobei der E-Mailserver derart ausgeführt ist, dass er eine an den Adressaten gesendete erste E-Mail mit wenigstens einem vorbestimmten Kriterium bewertet, basierend auf der Bewertung der ersten E-Mail automatisch eine zweite E-Mail herstellt und sie an den Rechner des Adressaten der ersten E-Mail sendet, bevor er die erste E-Mail an den Rechner des Adressaten weiter leitet, wobei die zweite E-Mail einen Hinweis, für den Adressaten liege eine eventuell unerwünschte E-Mail vor, umfasst.

Vorteilhafte Ausgestaltungen der erfindungsgemäßen Vorrichtung ergeben sich aus den Unteransprüchen.

Die weitere Aufgabe wird auch gelöst durch einen E-Mailserver, der an einen Adressaten gesendete E-Mails an einen Rechner des Adressaten weiterleitet, wobei
- auf dem E-Mailserver ein Rechnerprogramm läuft, das eine an den Adressaten gesendete erste E-Mail mit wenigstens einem vorbestimmten Kriterium bewertet und
- der E-Mailserver, basierend auf der Bewertung der ersten E-Mail, automatisch eine zweite E-Mail herstellt und sie an den Rechner des Adressaten der ersten E-Mail verschickt, bevor er die erste E-Mail an den Rechner des Adressat weiter leitet, wobei die zweite E-Mail einen Hinweis, für den Adressaten liege eine eventuell unerwünschte E-Mail vor, umfasst.

Vorteilhafte Ausgestaltungen des erfindungsgemäßen E-Mailservers ergeben sich aus den Unteransprüchen.

Ein Ausführungsbeispiel der Erfindung ist in den beigefügten schematischen Zeichnungen exemplarisch dargestellt. Es zeigen:
- Fig. 1: ein das erfindungsgemäße Verfahren veranschaulichendes Flussdiagramm,
- Fig. 2: ein lokales Rechnernetzwerk,
- Fig. 3: eine erste E-Mail und
- Fig. 4 und 5: jeweils eine zweite E-Mail.

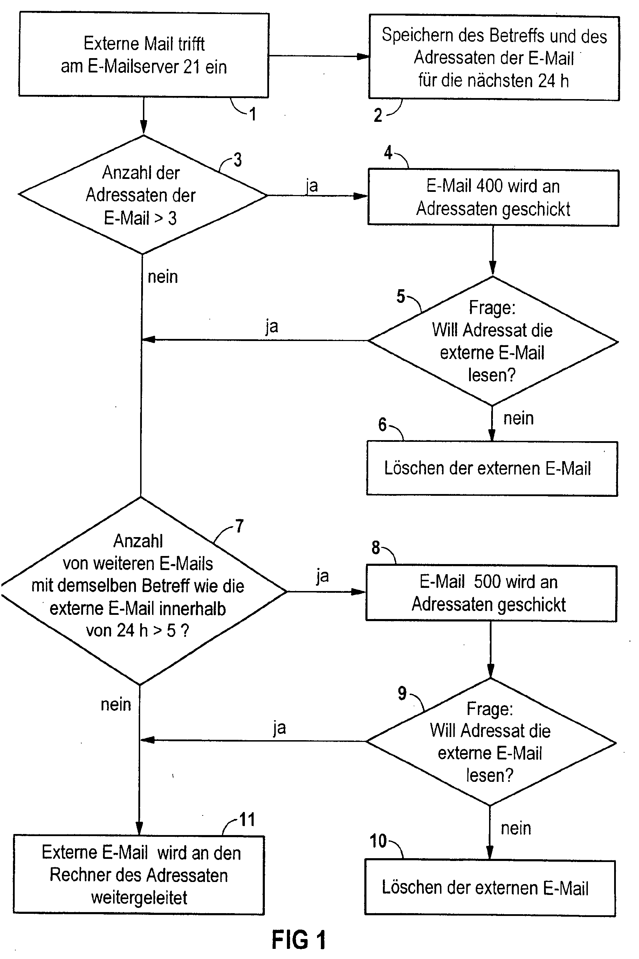

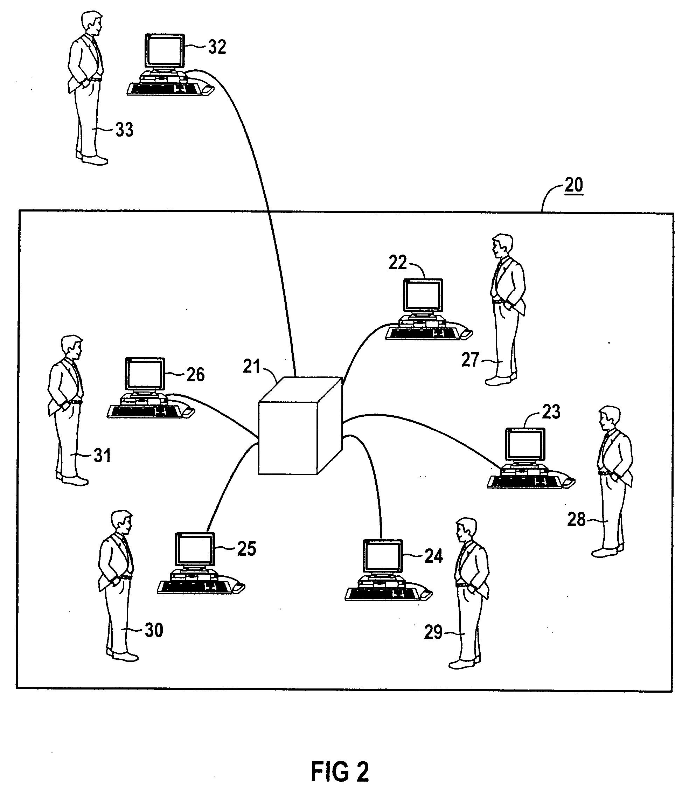

In der Fig. 1 ist ein Flussdiagramm mit Schritten 1 bis 11 zur Veranschaulichung des erfindungsgemäßen Verfahrens dargestellt, welches anhand der Fig. 2 näher erläutert wird.

Die Fig. 2 zeigt exemplarisch und schematisch ein lokales Rechnernetzwerk 20 eines Industrieunternehmens, das einen E-Mailserver 21 umfasst, mit dem mehrere Rechner 22 bis 26 verbunden sind. Der E-Mailserver 21 kann auch von externen Rechnern, wie einen in der Fig. 2 exemplarisch dargestellten Rechner 32, der nicht Teil des Rechnernetzwerkes 20 ist, kontaktiert werden. Somit kann auch eine Person 33 mit dem Rechner 32 einer der Personen 27 bis 31 eine E-Mail schicken, die diese mit einem der Rechner 22 bis 26 des Rechnernetzwerkes 20 lesen kann.

Bevor die Personen 27 bis 31 eine an sie adressierte E-Mail lesen können, müssen sie sie mit einem der Rechner 22 bis 26 in allgemein bekannter Weise vom E-Mailserver 21 abfragen oder der E-Mailserver 21 muss die entsprechende E-Mail an denjenigen Rechner der Rechner 22 bis 26 weiterleiten, an dem die entsprechende Person der Personen 27 bis 31 gerade arbeitet.

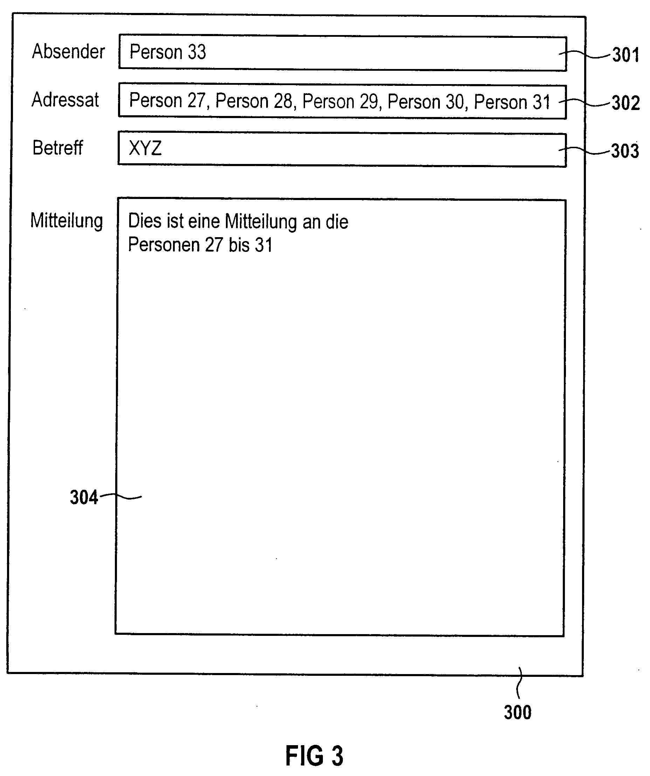

Im Falle des vorliegenden Ausführungsbeispieles schickt die Person 33 mit dem Rechner 32 eine einen Computervirus umfassende erste E-Mail 300 an die Person 27, um dem Industrieunternehmen zu schaden. Diese erste E-Mail 300 ist also unerwünscht und schematisch in der Fig. 3 gezeigt. Um einen möglichst großen Schaden zu verursachen, schickt die Person 33 dieselbe erste E-Mail 300 auch an die Personen 28 bis 31.

Die in der Fig. 3 gezeigte erste E-Mail 300 weist im Falle des vorliegenden Ausführungsbeispiels vier Felder 301 bis 304 auf. Das Feld 301 umfasst ein Angabe über den Absender der ersten E-Mail 300, also die Person 33, das Feld 302 umfasst Angaben über die Adressaten der ersten E-Mail 300, also die Personen 27 bis 31, das Feld 303 umfasst einen Betreff, der im Falle des vorliegenden Ausführungsbeispiels XYZ lautet, und das Feld 304 umfasst die Mitteilung, also den Inhalt der ersten E-Mail 300.

Nachdem die Person 33 die erste E-Mail 300 an die Personen 27 bis 31 abgeschickt hat, trifft sie auf dem E-Mailserver 21 ein (Schritt 1 des Flussdiagramms), der im Falle des vorliegenden Ausführungsbeispiels automatisch den Betreff und den oder die dazugehörigen Adressaten einer von einem externen Rechner verschickte E-Mail für die nächsten 24 Stunden speichert (Schritt 2 des Flussdiagramms), also auch den Betreff und die Adressaten der von der Person 33 mit dem Rechner 32 verschickten erste E-Mail 300.

Im Falle des vorliegenden Ausführungsbeispieles ermittelt der E-Mailserver 21 automatisch mit einem geeigneten, auf dem E-Mailserver 21 gespeicherten Rechnerprogramm die Anzahl der Adressaten, an die dieselbe E-Mail von einem externen Rechner gesendet wurde. Wenn diese Anzahl größer als drei ist, stellt der E-Mailserver 21 automatisch eine weitere E-Mail her und schickt sie den Adressaten der externen E-Mail. (Schritt 3 des Flussdiagramms).

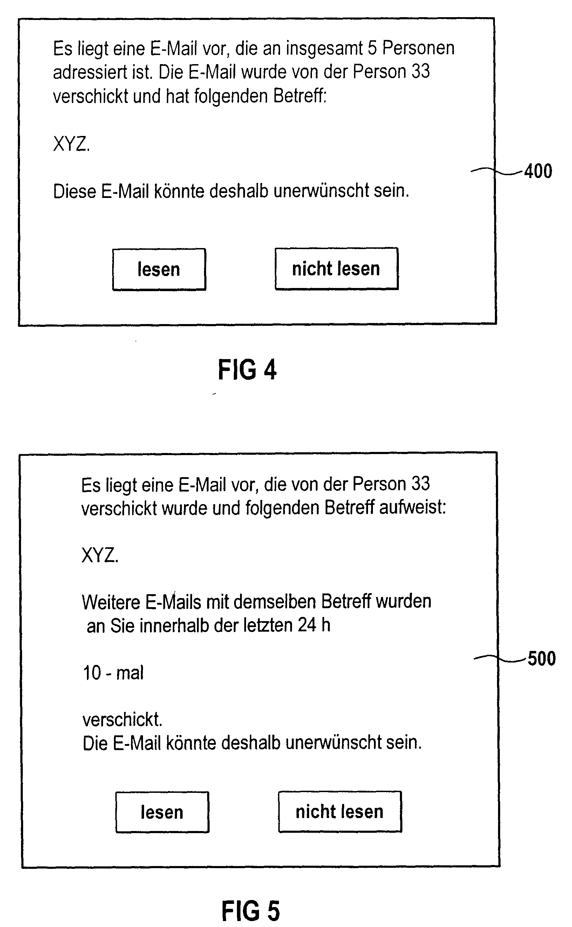

Im Falle des vorliegenden Ausführungsbeispiels schickte die Person 33 den Personen 27 bis 31 dieselbe erste E-Mail 300, die Anzahl der Adressaten, an die dieselben E-Mail geschickt wurde, ist also fünf. Die Anzahl der Adressaten wird anhand des Feldes 302 der ersten E-Mail 300 ermittelt. Daraufhin erstellt der E-Mailserver 21 für jede der Personen 27 bis 31 eine weitere E-Mail und schickt sie den Personen 27 bis 31, bevor die Personen 27 bis 31 die erste E-Mail 300 von dem E-Mailserver 21 abrufen und mit einem der Rechner 22 bis 26 lesen können (Schritt 4 des Flussdiagramms). Die Fig. 4 zeigt exemplarisch und schematisch eine E-Mail 400 dieser weiteren E-Mails, welche an die Person 27 geschickt wird. Mit dieser weiteren E-Mail 400 wird die Person 27 darüber informiert, dass für sie eine eventuell unerwünschte E-Mail, also die von der Person 33 abgeschickte erste E-Mail 300 am E-Mailserver 21 eingetroffen und abrufbar ist. Die weitere E-Mail 400 umfasst auch noch Angaben über die Person 33 und die Anzahl der Adressaten der ersten E-Mail 300. Jede der Personen 27 bis 31 kann daraufhin entscheiden, ob sie die an sie adressierte erste E-Mail 300 lesen will oder nicht (Schritt 5 des Flussdiagramms).

Im Falle des vorliegenden Ausführungsbeispiel entscheiden die Personen 28 bis 31, dass Sie die an sie adressierte erste E-Mail 300 nicht lesen wollen. Daraufhin klicken sie mit einer Rechnermaus desjenigen Rechners der Rechner 22 bis 26, den sie gerade benützen, das Wort "nicht lesen" derjenigen von dem E-Mailserver 21 automatisch jeweils an sie geschickte weitere E-Mail 400, worauf die für sie bestimmte erste E-Mail 300 vom E-Mailserver 21 gelöscht wird (Schritt 6 des Flussdiagramms). Die Person 27 möchte aber die für sie bestimmte erste E-Mail 300 lesen, worauf sie das Wort "lesen" der E-Mail 400 anklickt.

Anschließend berechnet im Falle des vorliegenden Ausführungsbeispiels der E-Mailserver 21 automatisch die Anzahl von weiteren E-Mails, die von einem externen Rechner innerhalb der letzten 24 Stunden abgeschickt wurden und denselben Betreff aufweisen (Schritt 7 des Flussdiagramms). Diese weiteren E-Mails können an denselben oder an verschiedene Adressaten gesendet worden sein und können ferner auch von verschiedenen Absendern stammen. Sollte diese Anzahl im Falle des vorliegenden Ausführungsbeispiels größer als fünf sein, erstellt der E-Mailserver 21 automatisch eine weitere E-Mail und schickt sie an diesen Adressaten (Schritt 8 des Flussdiagramms). Andernfalls wird die am E-Mailserver 21 eingetroffene E-Mail direkt an den Adressaten weitergeleitet, der diese E-Mail daraufhin lesen kann.

Im Falle des vorliegenden Ausführungsbeispiels schickte die Person 33 innerhalb von 24 Stunden jeweils zehn weitere E-Mails an die Person 27, die denselben Betreff aufweisen, wie die an die Personen 27 abgeschickte erste E-Mail 300. Die Anzahl der weiteren E-Mails, die innerhalb der letzten 24 Stunden am E-Mailserver 21 eingetroffenen sind, denselben Betreff aufweisen wie die erste E-Mail 300 und für die Person 27 bestimmt sind, ist also zehn. Daraufhin erstellt der E-Mailserver 21 automatisch eine in der Fig. 5 gezeigte weitere E-Mail 500, die automatisch an die Person 27 geschickt wird.

Mittels der E-Mail 500 wird die Person 27 nochmals darauf hingewiesen, dass für sie eine eventuell unerwünschte E-Mail, also die von der Person 33 abgeschickte erste E-Mail 300 am E-Mailserver 21 eingetroffen ist. Die E-Mail 500 umfasst des weiteren Angaben über den Betreff der ersten E-Mail 300, über die Person 33 und die Anzahl weiterer E-Mails, die innerhalb der letzten 24 Stunden für die Person 27 mit demselben Betreff am E-Mailserver 21 eingetroffen sind. Die Person 27 kann daraufhin entscheiden, ob sie die an sie adressierte erste E-Mail 300 lesen will oder nicht (Schritt 9 des Flussdiagramms).

Im Falle des vorliegenden Ausführungsbeispiel entscheidet die Personen 27, dass Sie die an sie adressierte erste E-Mail 300 doch nicht lesen will. Daraufhin klickt sie das Wort "nicht lesen" der E-Mail 500 an, worauf die für sie bestimmte erste E-Mail 300 vom E-Mailserver 21 gelöscht wird, bevor die Person 27 diese erste E-Mail 300 öffnet, bevor also diese erste E-Mail 300 einen Schaden anrichten kann (Schritt 10 des Flussdiagramms).

Sollte die Person 27 jedoch trotzdem die erste E-Mail 300 lesen wollen, klickt sie das Wort "lesen" der E-Mail 500 an, worauf die erste E-Mail 300 an den Rechner der Rechner 22 bis 26 weitergeleitet wird, den die Person 27 gerade benützt. Daraufhin kann die Person 27 die erste E-Mail 300 öffnen und lesen (Schritt 11 des Flussdiagramms).

Sollte im Falle des vorliegenden Ausführungsbeispiel die Anzahl der Adressaten einer am E-Mailserver 21 eingetroffenen und von einem externen Rechner abgeschickten E-Mail kleiner als vier sein (Schritt 3 des Flussdiagramms), erstellt der E-Mailserver 21 keine weitere E-Mail 400, sondern berechnet gleich automatisch die Anzahl von weiteren E-Mails, die von einem externen Rechner innerhalb der letzten 24 Stunden an denselben Adressaten abgeschickt wurden und denselben Betreff aufweisen (Schritt 7 des Flussdiagramms). Wenn diese Anzahl größer als fünf ist, erstellt der E-Mailserver 21 wieder automatisch eine weitere E-Mail entsprechend der in der Fig. 5 dargestellten E-Mail 500 und schickt sie dem Adressaten. Andernfalls leitet der E-Mailserver 21 diese E-Mail direkt an den Adressaten weiter.

Da der E-Mailserver 21 im Falle des vorliegenden Ausführungsbeispiels nur E-Mails überprüft, die von externen Rechnern wie den Rechner 31 abgeschickt wurden, werden E-Mails, die von einem der Rechner 22 bis 31 verschickt werden, nicht überprüft.

Für das erfindungsgemäße Verfahren ist es aber nicht notwendig, dass nur externe E-Mails überprüft werden. Das erfindungsgemäße Verfahren kann auch dann verwendet werden, wenn es kein lokales Rechnernetzwerk gibt. Dann ist es denkbar, dass ein öffentlich zugänglicher E-Mailserver, der z.B. von einem Service-Anbieter betrieben wird, das erfindungsgemäße Verfahren durchführt.

Für das erfindungsgemäße Verfahren ist es im Übrigen auch nicht zwingend nötig, dass die Schritte 3 und 7 des Flussdiagramms ausgeführt werden, dass also der E-Mailserver 21 die Anzahl der Adressaten überprüft, an die dieselbe E-Mail adressiert ist und anschließend die Anzahl der E-Mails überprüft, die an denselben Adressaten oder weiteren Adressaten innerhalb einer vorgegeben Zeit mit demselben Betreff geschickt wurden. Es kann auch nur der Schritt 3 oder nur der Schritt 7 oder erst der Schritt 7 und dann der Schritt 3 des Flussdiagramms ausgeführt werden. Für den Schritt 7 kann auch nur die Anzahl von E-Mails überprüft werden, die an denselben Adressaten innerhalb der vorgegebenen Zeitdauer verschickt wurden. Es kann aber auch ein anderes Kriterium zur Bewertung der ersten E-Mail verwendet werden.

Ein Kriterium zum Erkennen einer unerwünschten E-Mail ist beispielsweise eine Überprüfung der Checksumme des dem Feld 303 zugeordneten Datensatzes und/oder eine Überprüfung der Checksumme des dem Feld 304 zugeordneten Datensatzes der in der Fig. 3 gezeigten ersten E-Mail 300. Das Feld 303 ist dem Betreff und das Feld 304 ist der eigentlichen Mitteilung der ersten E-Mail 300 zugeordnet. Die Checksumme einer dieser Datensätze kann z.B. folgendermäßen ermittelt werden.

Die Checksumme ist dadurch charakterisiert, dass grundsätzlich eine Änderung eines einzelnen Bits im ganzen Datensatz die Checksumme ändert. Dies wird erreicht, in dem alle Bytes eines Datensatzes aufsummiert werden.

Die Checksumme kann z.B. mit folgender Programmroutine, die im Falle des vorliegenden Ausführungsbeispiels in der Programmiersprache BASIC ausgeführt ist, ermittelt werden. Ferner wird angenommen, dass die erste E-Mail 300 im ASCII oder im erweiterten ASCII Format übertragen wird.

FOR i=1 to Datensatzlänge
CHECKSUM = MOD(CHECKSUM + ASC(MID$(DATENSATZ$,i,1)), 256)
NEXT i
END

Es wird also die Zeichennummer der i-te Zeichen zur bisherigen Checksumme addiert und anschließend von der neu ermittelten Checksumme 256 subtrahiert, wenn die neu ermittelte Checksumme größer als 256 ist. Die Checksumme ist daher ein Wert zwischen 1 und 256. Solange zwei Datensätze identisch sind, sind auch ihre Checksummen identisch. Eine höhere Sicherheit kann man erreichen, indem man anstelle der 256 eine höhere Zweierpotenz nimmt.

Aufgrund der ermittelten Checksummen der Betreffs und/oder der Mitteilungen von E-Mails, die am E-Mailserver 21 eintreffen, kann z.B. die Anzahl gleicher E-Mails in einfacher Weise ermittelt werden.

Die im Ausführungsbeispiel genannten Werte, bei denen die E-Mails 400 und 500 hergestellt werden, und die E-Mails 400 und 500 sind nur exemplarischer Natur.

Das Rechnernetzwerk 20 muss auch nicht notwendigerweise einem Industrieunternehmen zugeordnet sein. Es kann insbesondere auch einer staatlichen Behörde, einer Universität oder einer Forschungseinrichtung zugeordnet sein.

## Patentansprüche

1. Verfahren zum Erkennen einer unerwünschten E-Mail, aufweisend folgende Verfahrensschritte:
- Empfangen einer an einen Adressaten (27-31) gesendeten ersten E-Mail (300) mit einem E-Mailserver (21),
- automatisches Bewerten der ersten E-Mail (300) mit wenigstens einem vorbestimmten Kriterium und
- basierend auf der Bewertung der ersten E-Mail (300), automatisches Herstellen und Versenden einer zweiten E-Mail (400, 500) an einen Rechner (22-26) des Adressaten (27-31) der ersten E-Mail (300) mit einem Hinweis, für den Adressaten (27-31) liege eine eventuell unerwünschte E-Mail vor, bevor die erste E-Mail (300) an den Rechner (22-26) des Adressat (27-31) weiter geleitet wird.

2. Verfahren nach Anspruch 1, aufweisend folgende zusätzliche Verfahrensschritte:
- Entscheiden, ob der Adressat (27-31) der ersten E-Mail (300) aufgrund des Hinweises der zweiten E-Mail (27-31) die erste E-Mail lesen möchte und
- Weiterleiten der ersten E-Mail (300) an den Rechner des Adressaten, wenn dieser die erste E-Mail lesen möchte und automatisches Löschen der ersten E-Mail (300), wenn der Adressat (22-27) die erste E-Mail (300) nicht lesen möchte.

3. Verfahren nach einem der Ansprüche 1 oder 2, bei dem das Kriterium eine Anzahl von weiteren Adressaten (27-31) ist, an denen ebenfalls die erste E-Mail (300) adressiert ist.

4. Verfahren nach einem der Ansprüche 1 bis 3, bei dem das Kriterium eine Anzahl von weiteren E-Mails ist, die in einer vorgegebenen Zeitdauer an den Adressaten (27-31) oder weiteren Adressaten (27-31) gesendet wurden und denselben Betreff (303) aufweisen wie die erste E-Mail (300).

5. Verfahren nach einem der Ansprüche 1 bis 4, bei dem das Kriterium eine Anzahl von weiteren E-Mails ist, die dieselbe Checksumme des Datensatzes des Betreffs (303) und/oder der Mitteilung (304) aufweisen wie die erste E-Mail (300).

6. Verfahren nach einem der Ansprüche 1 bis 5, bei dem die erste E-Mail (300) nur dann bewertet wird, wenn sie von einem Rechner (32) versendet wurde, der außerhalb eines lokalen Rechnernetzwerkes (20) betrieben wird, wobei das lokale Rechnernetzwerk (20) den E-Mailserver (21) und den Rechner (22-26) des Adressaten (27-31) umfasst.

7. Vorrichtung zum Erkennen einer unerwünschten E-Mail bevor ein Adressat (27-31) der unerwünschten E-Mail die unerwünschte E-Mail liest, aufweisend
- einen E-Mailserver (21) und
- einen mit dem E-Mailserver (21) verbundenen Rechner (27-31)
zum Lesen von an den Adressaten (27-31) bestimmten E-Mails, wobei der E-Mailserver (21) derart ausgeführt ist, dass er eine an den Adressaten (27-31) gesendete erste E-Mail (300) mit wenigstens einem vorbestimmten Kriterium bewertet, basierend auf der Bewertung der ersten E-Mail (300) automatisch eine zweite E-Mail (400, 500) herstellt und sie an den Rechner (22-26)des Adressaten (27-31) der ersten E-Mail (300) sendet, bevor er die erste E-Mail (300) an den Rechner (22-26) des Adressaten (27-31) weiter leitet, wobei die zweite E-Mail (400, 500) einen Hinweis, für den Adressaten (27-31) liege eine eventuell unerwünschte E-Mail vor, umfasst.

8. Vorrichtung nach Anspruch 7, bei der der E-Mailserver (21), basierend auf einer Nachricht als Antwort auf die zweite E-Mail (400, 500), die ersten E-Mail (300) an den Rechner des Adressaten weiter leitet, wenn dieser die erste E-Mail lesen möchte, und automatisch die erste E-Mail (300) E-Mail (300) löscht, wenn der Adressat (22-27) die erste E-Mail (300) nicht lesen möchte.

9. Vorrichtung nach einem der Ansprüche 7 oder 8, bei der das Kriterium eine Anzahl von weiteren Adressaten (27-31) ist, an denen ebenfalls die erste E-Mail (300) adressiert ist.

10. Vorrichtung nach einem der Ansprüche 7 bis 8, bei der das Kriterium eine Anzahl von weiteren E-Mails ist, die in einer vorgegebenen Zeitdauer an den Adressaten (27-31) oder weiteren Adressaten (27-31) gesendet wurden und denselben Betreff (303) aufweisen wie die erste E-Mail (300).

11. Vorrichtung nach einem der Ansprüche 7 bis 9, bei der das Kriterium eine Anzahl von weiteren E-Mails ist, die dieselbe Checksumme des Datensatzes des Betreffs (303) und/oder der Mitteilung (304) aufweisen wie die erste E-Mail (300).

12. Vorrichtung nach einem der Ansprüche 7 bis 11, bei der der E-Mailserver (21) und der Rechner (22-26) des Adressaten (27-31) ein lokales Rechnernetzwerk (20) bilden und die erste E-Mail (300) nur dann bewertet wird, wenn sie von einem Rechner (32) versendet wurde, der außerhalb des lokalen Rechnernetzwerkes (20) betrieben wird.

13. E-Mailserver, der an einen Adressaten (27-31) gesendete E-Mails an einen Rechner (22-26) des Adressaten (27-31) weiterleitet, wobei
- auf dem E-Mailserver ein Rechnerprogramm läuft, das eine an den Adressaten (27-31) gesendete erste E-Mail (300) mit wenigstens einem vorbestimmten Kriterium bewertet und
- der E-Mailserver (21), basierend auf der Bewertung der ersten E-Mail (300), automatisch eine zweite E-Mail (400, 500) herstellt und sie an den Rechner (22-26) des Adressaten (27-31) der ersten E-Mail (300) verschickt, bevor er die erste E-Mail (300) an den Rechner (22-26) des Adressat (27-31) weiter leitet, wobei die zweite E-Mail (400, 500) einen Hinweis, für den Adressaten (27-31) liege eine eventuell unerwünschte E-Mail vor, umfasst.

14. E-Mailserver nach Anspruch 13, bei dem der E-Mailserver (21), basierend auf einer Nachricht als Antwort auf die zweite E-Mail (400, 500), die ersten E-Mail (300) an den Rechner des Adressaten weiter leitet, wenn dieser die erste E-Mail lesen möchte, und automatisch die erste E-Mail (300) E-Mail (300) löscht, wenn der Adressat (22-27) die erste E-Mail (300) nicht lesen möchte.

15. E-Mailserver nach einem der Ansprüche 13 oder 14, bei dem das Kriterium eine Anzahl von weiteren Adressaten (27-31) ist, an denen ebenfalls die erste E-Mail (300) adressiert ist.

16. E-Mailserver nach einem der Ansprüche 13 bis 15, bei dem das Kriterium eine Anzahl von weiteren E-Mails ist, die in einer vorgegebenen Zeitdauer an den Adressaten (27-31) oder weiteren Adressaten (27-31) gesendet wurden und denselben Betreff (303) aufweisen wie die erste E-Mail (300).

17. E-Mailserver nach einem der Ansprüche 13 bis 16, bei dem das Kriterium eine Anzahl von weiteren E-Mails ist, die dieselbe Checksumme des Datensatzes des Betreffs (303) und/oder der Mitteilung (304) aufweisen wie die erste E-Mail (300).

18. E-Mailserver nach einem der Ansprüche 13 bis 17, bei dem die erste E-Mail (300) nur dann bewertet wird, wenn sie von einem Rechner (32) versendet wurde, der außerhalb eines lokalen Rechnernetzwerkes (20) betrieben wird, wobei das lokale Rechnernetzwerk (20) den E-Mailserver (21) und den Rechner (22-26) des Adressaten (27-31) umfasst.
